# EUROPEAN PATENT APPLICATION

(11) **EP 2 549 685 A1**
(43) Date of publication of application: **23.01.2013**
(21) Application number: 11755636.5
(22) Date of filing: 24.02.2011
(51) Int. Cl.: H04L 12/28

(54) **METHOD AND DEVICE FOR PROVIDING CALL SERVICE TO USER**

(30) Priority: 19.03.2010 CN 201010130133
(71) Applicant: Huawei Technologies Co., Ltd., Shenzhen, Guangdong 518129 (CN)
(72) Inventor: WU, Jian, Shenzhen Guangdong 518129 (CN); WU, Yong, Shenzhen Guangdong 518129 (CN); SHEN, Qingchun, Shenzhen Guangdong 518129 (CN)
(74) Representative: Lord, Michael
(86) International application number: PCT/CN2011/071226
(87) International publication number: WO 2011/113319

(57) **Abstract**

A method and an apparatus for providing a service to a user are provided. The method mainly includes that a mobile communication system on a network side receives call information of calling a mobile terminal of a user and then calls the user according to stored location information corresponding to the mobile terminal of the user sent by an access gateway AG. The AP is deployed at the enterprise to implement accurate positioning of a user that enters or leaves an office of an enterprise and update to a mobile communication system on a network side through the AG in real time. Therefore, the accurate positioning of a mobile terminal of a user no longer has to rely on the network coverage of the PLMN.

## Description

This application claims priority to Chinese Patent Application No. 201010130133.2, filed with the Chinese Patent Office on March 19, 2010 and entitled "METHOD AND APPARATUS FOR PROVIDING A CALL SERVICE TO A USER", which is incorporated herein by reference in its entirety.

### FIELD OF THE INVENTION

The present invention relates to the field of communications technologies, and in particular, to a method and an apparatus for providing a call service to a user.

### BACKGROUND OF THE INVENTION

For enterprise users nowadays, the activities usually take place at office or out of office When a user leaves or enters an office, the location information of the mobile phone of the user is changed. As the demands of users become diversified, the users need different experiences.

For example, when a user is at an office, the association between the mobile phone of the user and a fixed-line phone may be automatically established without manual operations of the user. When the user leaves the office, the association between the mobile phone of the user and the fixed-line phone requires to be automatically released.

In the prior art, a method for providing different call services to a user according to location information of the user is as described below. Cell ID (cell identity) information of a user is acquired relying on the network coverage condition of the PLMN (Public Land Mobile Network, Public Land Mobile Network). When a call for a called user is received, the current location information of the called user is accurately acquired according to the Cell ID information. The acquired current location information of the called user is used to implement the call for the called user.

In the process of implementing the present invention, the inventor finds in the prior art that every time a call for a user is received, a Cell ID of the called user needs to be acquired first and the current location information of the called user is acquired through the Cell ID, so the called party is called according to the location information of the user. Therefore, the manner of acquiring the location information is relatively complicated and the location information of the called user needs to rely on the network coverage of the PLMN to position the user. If the positioning of the network coverage of the PLMN is not accurate, the experience of the called user is not high.

### SUMMARY OF THE INVENTION

The embodiments of the present invention provide a method and an apparatus for providing a call service to a user, so as to perform accurate positioning of the user conveniently according to location information corresponding to a mobile terminal of the user sent by an AG, and provide corresponding call services to the user.

A method for providing a call service to a user, which includes:
receiving call information of calling a mobile terminal of a user; and
calling the user according to stored location information corresponding to the mobile terminal of the user sent by an access gateway AG.

An apparatus for providing a call service to a user, disposed on a network side, in which the apparatus specifically includes:
a call information receiving module, configured to receive call information of calling a mobile terminal of a user; and
a call service providing module, configured to, after the call information receiving module receives the call information, call the user according to stored location information corresponding to the mobile terminal of the user sent by an access gateway AG.

A method for transmitting location information corresponding to a mobile terminal of a user, which includes:
receiving location information corresponding to the mobile terminal of the user sent by an access point AP; and
sending the location information corresponding to the mobile terminal of the user to a mobile communication system on a network side for storage, so that the mobile communication system receives the call information of calling the mobile terminal of the user and then calls the user according to the stored location information corresponding to the mobile terminal of the user.

An access gateway AG, which includes:
an information receiving module, configured to receive location information corresponding to a mobile terminal of a user sent by an access point AP; and
an information sending module, configured to send the location information corresponding to the mobile terminal of the user received by the information receiving module to a mobile communication system on a network side for storage, so that the mobile communication system receives call information of calling the mobile terminal of the user and calls the user according to the stored location information corresponding to the mobile terminal of the user sent by the AG.

It can be seen from the technical solutions provided in the embodiments of the present invention that, in the embodiment of the present invention, the AG reports the location information corresponding to the mobile terminal of the user sent by the AP to a mobile communication system on a network side, so that the mobile communication system on the network side receives the call information of calling the mobile terminal of the user and directly calls the user according to the stored location information corresponding to the mobile terminal of the user sent by the access gateway AG. Therefore, the mobile terminal of the user does not need to be positioned relying on the network coverage of the PLMN and the positioning of the user is simpler and more accurate.

### BRIEF DESCRIPTION OF THE DRAWINGS

To describe the technical solutions according to the embodiments of the present invention more clearly, the accompanying drawings for describing the embodiments are introduced briefly in the following. Apparently, the accompanying drawings in the following description are only some embodiments of the present invention, and persons skilled in the art can derive other drawings from the accompanying drawings without creative efforts.
FIG. 1A is a processing flow chart of a method for providing a call service to a user according to location information of the user provided in an embodiment of the present invention;
FIG. 1B is a flow chart of a method for transmitting location information corresponding to a mobile terminal of a user according to an embodiment corresponding to the relevant embodiment in FIG. 1A;
FIG. 2 is a processing flow chart of a method for providing a simultaneously ringing service of a mobile phone and a fixed-line phone to a user when the user is within an office provided in an embodiment of the present invention;
FIG. 3 is a processing flow chart of a method for only calling a mobile phone of a user when the user leaves the office provided in an embodiment of the present invention;
FIG. 4 is a schematic diagram of specific implementation of an apparatus of providing a service to a user provided in an embodiment of the present invention; and
FIG. 5 is a schematic diagram of specific implementation of an access gateway AG provided in an embodiment of the present invention.

### DETAILED DESCRIPTION OF THE EMBODIMENTS

For ease of understanding of the embodiments of the present invention, further explanation and illustration are provided in the following by taking several specific embodiments as examples with reference to the accompanying drawings, and the several embodiments are not intended to limit the embodiments of the present invention.

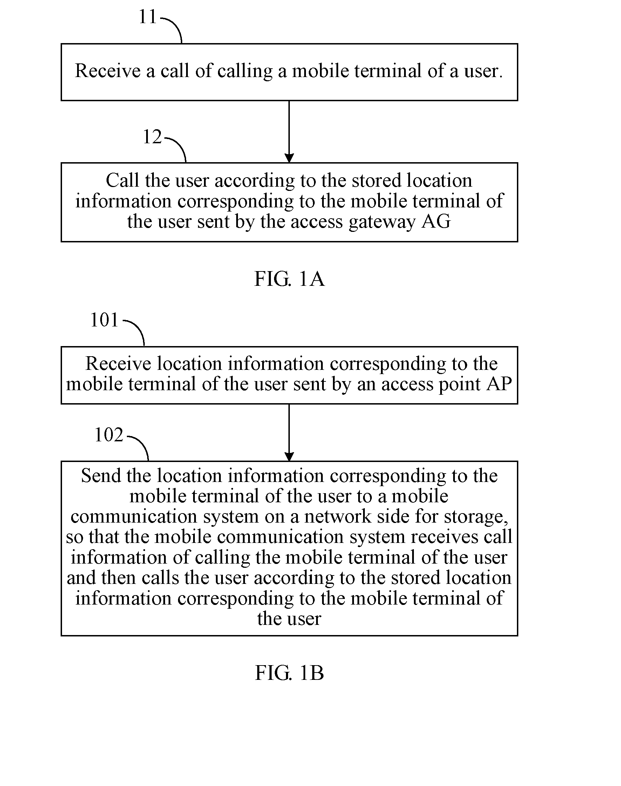

The embodiment is applicable to an application scenario in which an AP (Access Point, access point) is deployed on a client side and an AG (Access Gateway, access gateway) and a mobile communication system are deployed on a network side. The processing process of a method for providing a call service to a user according to location information of the user provided in the embodiment is shown in FIG. 1A, which includes the following processing steps:

Step 11: The AP acquires location information corresponding to a mobile terminal of a user that enters or leaves a work space of an enterprise on the client side and sends the location information to the AG on the network side.

Step 12: The AG transmits the location information corresponding to the mobile terminal transmitted by the AP to the mobile communication system on the network side.

step 11, the mobile communication system receives call information of calling the mobile terminal of the user.

Specifically, before the mobile communication system receives the call information of calling the mobile terminal of the user, the AP first needs to acquire location information corresponding to the mobile terminal of the user that enters or leaves the office on the client side, that is, the office of the enterprise and send the location information to the AG on the network side, and then the AG transmits the location information corresponding to the mobile terminal transmitted from the AP to a mobile communication system on a network side.

In the embodiment, an AP needs to be deployed on a client side, the AP monitors a user that enters or leaves the office of the enterprise on the client side, and acquires the location information corresponding to a mobile terminal of the user that enters or leaves the office of the enterprise, and the location information may be information such as a location and/or a call state corresponding to the number of the mobile terminal of the user.

Every time the mobile terminal of the user enters the office of the enterprise controlled by the AP, the mobile terminal may establish a connection with the AP. The AP may then acquire the location information corresponding to the mobile terminal of the user and the AP saves the acquired information. The AP checks whether a mobile terminal of a user that enters the office of the enterprise is still within the office at every predetermined interval. If the AP detects that a user already leaves the office of the enterprise controlled by the AP, the AP needs to delete the saved location information corresponding to the mobile terminal of the user.

In addition, in this embodiment, an AG further needs to be deployed on a carrier side on the network side. The AP transmits the acquired location information corresponding to the mobile terminal of the user that enters or leaves the office of the enterprise to the AG through an IP network.

The AG receives the location information corresponding to the mobile terminal transmitted by the AP and transmits the location information to the mobile communication system on the network side in real time through a SOAP (Simple Object Access Protocol, Simple Object Access Protocol) interface.

In practical applications, the AG may also store and update the location information corresponding to the mobile terminal of the user transmitted by the AP. When the AG receives, for the first time, location information corresponding to the mobile terminal sent by the AP, the AG may store the location information corresponding to the mobile terminal and send the location information to the mobile communication system on the network side. When the AG receives the location information corresponding to the mobile terminal again and determines that the location information corresponding to the mobile terminal already changes, the AG updates the stored location information corresponding to the mobile terminal and sends the updated location information corresponding to the mobile terminal to the mobile communication system on a network side. When the AG determines that the location information corresponding to the mobile terminal does not change, the AG does not update the stored location information corresponding to the mobile terminal and does not send the location information corresponding to the mobile terminal to the mobile communication system on the network side.

Step 12: The mobile communication system calls the user according to the stored location information corresponding to the mobile terminal of the user sent by the access gateway AG.

The mobile communication system stores the location information corresponding to the mobile terminal sent by the AG. After the call for the mobile terminal of the user is received, the mobile communication system provides a corresponding call service is provided to the user based on the stored location information corresponding to the mobile terminal of the user.

In specific embodiments, it is assumed that the user has two terminals, a fixed-line phone and a mobile phone in an office of an enterprise. An association relationship may be set between the two terminals. When it is determined that the user enters the office of the enterprise according to the location information corresponding to the mobile terminal, the mobile phone and the fixed-line phone may ring at the same time after the mobile communication system receives call information of calling the mobile phone of the user.

For example, when the location information corresponding to the mobile terminal further includes call state information of the mobile phone of the user in the office of the enterprise and the call state information of the mobile phone of the user is busy, the fixed-line phone associated with the mobile phone in the office of the enterprise may be called after the mobile communication system receives the call information of calling the mobile phone of the user.

For example, when it is determined that the user already leaves the office of the enterprise according to the location information corresponding to the mobile terminal, the fixed-line phone does not need to ring after the mobile phone of the user receives an incoming call, and instead, only the mobile phone rings; or information of anther terminal associated with the mobile phone outside the office of the enterprise is acquired and the mobile phone and anther terminal are called.

FIG. 1B is a flow chart of a method for transmitting location information corresponding to a mobile terminal of a user according to an embodiment corresponding to the relevant embodiment in FIG. 1A, which includes the following steps:

Step 101: The AG receives location information corresponding to the mobile terminal of the user sent by the access point AP.

Step 102: The AG sends the location information corresponding to the mobile terminal of the user to the mobile communication system on a network side for storage, so that the mobile communication system receives call information of calling the mobile terminal of the user and then calls the user according to the stored location information corresponding to the mobile terminal of the user.

In the embodiment, the AP is deployed on a client side, and the AG receives the location information corresponding to the mobile terminal of the user sent by the AP and sends the location information to the mobile communication system on the network side, so that the mobile communication system on the network side accurately positions a mobile terminal of a user that enters or leaves the office of the enterprise and the positioning of the mobile terminal of the user does not rely on the network coverage of the PLMN. Also, after the call information of the mobile phone of the user is received, the user may be called directly according to the stored location information corresponding to the mobile terminal of the user sent by the access gateway AG, so the mobile communication system is not required to acquire the current location information according to a current Cell ID of a mobile phone of a user, so that the processing of the call service becomes simpler. In addition, call state information is set in the location information, so that when a processed mobile phone of a user in an enterprise is in a busy state, a fixed-line phone associated with the mobile phone is directly called, instead of rejecting the call directly.

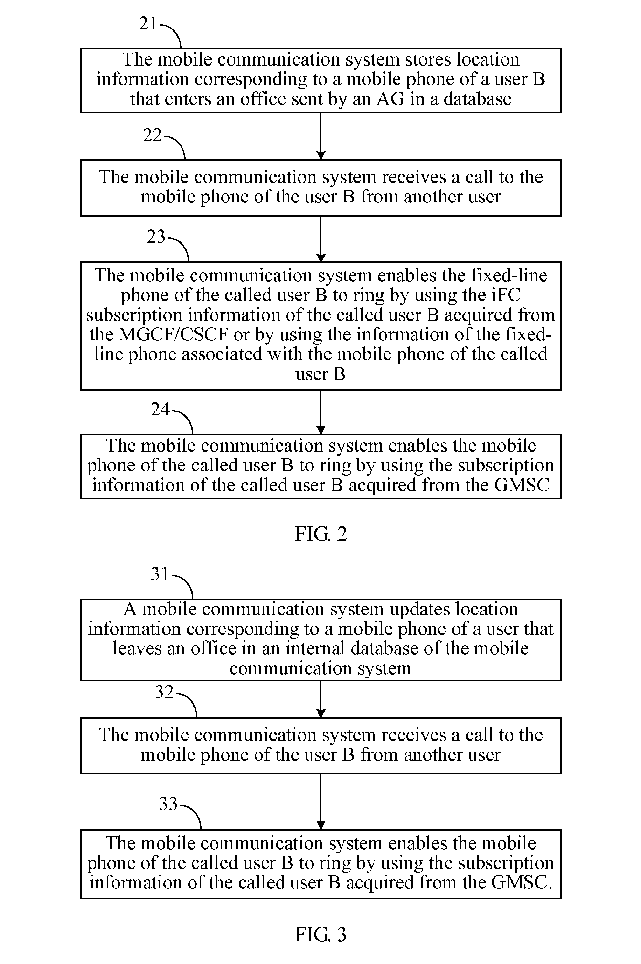

The embodiment is applicable to a scenario in which a mobile terminal (mobile phone) of a user locates at an office of an enterprise. The processing process of the method for providing a simultaneously ringing service of a mobile phone and a fixed-line phone to a user when the user is at an office provided in the embodiment is shown in FIG. 2, which includes the following processing steps:

Step 21: A mobile communication system stores location information corresponding to a mobile phone of a user B that enters an office sent by an AG in a database.

When an AP deployed on a client side monitors that the mobile phone of the user B enters an area covered by the AP, that is, an office of an enterprise, the AP acquires the location information corresponding to the mobile phone of the user B. The location information may be information such as a location and/or a call state corresponding to the number of the mobile phone of the user B. Also, the location information corresponding to the mobile phone of the user B is transmitted to an AG deployed on a carrier side through the IP network.

Next, the AG transmits the location information corresponding to the mobile phone of the user B to a mobile communication system deployed on a network side through a SOAP interface.

In practical applications, the AG may also store and update the location information corresponding to the mobile terminal of the user transmitted by the AP. When the AG receives, for the first time, the location information corresponding to the mobile terminal sent by the AP, the AG may store the location information corresponding to the mobile terminal and send the location information to the mobile communication system on the network side. When the AG receives the location information corresponding to the mobile terminal again and determines that the location information corresponding to the mobile terminal already changes, the AG updates the stored location information corresponding to the mobile terminal and sends the updated location information corresponding to the mobile terminal to a mobile communication system on a network side. When the AG determines that the location information corresponding to the mobile terminal does not change, the AG does not update the stored location information corresponding to the mobile terminal and does not send the location information corresponding to the mobile terminal to the mobile communication system on the network side.

The mobile communication system may be disposed in an intelligent network. The mobile communication system stores the received location information corresponding to the mobile phone of the user B in an internal database.

The mobile communication system also needs to manage service information of users. The service information includes information of different services provided according to different locations and call states of the users.

Step 22: The mobile communication system receives a call for the mobile phone of the user B from another user

After receiving the call information for the mobile phone of the user B, the mobile communication system queries the internal database to learn that the called user B is within the office and determine that the simultaneously ringing function of the mobile phone of the user B and the fixed-line phone in the office of the user B needs to be implemented according to the managed service information of the users.

Step 23: The mobile communication system enables the fixed-line phone of the called user B to ring by using the iFC subscription information of the called user B acquired from the MGCF (Media Gateway Control Function, Media Gateway Control Function)/CSCF (Call State Control Function, Call State Control Function) or by using the information of the fixed-line phone associated with the mobile phone of the user B, where the information is registered by the user B in advance. Specifically, the mobile communication system delivers CONNECT (connect) by using the iFC subscription information of the called user B to connect the fixed-line phone of the called user B and the fixed-line phone terminal of the called user B rings. Alternatively, in practical applications, the user B directly registers information such as an IP address of the fixed-line phone associated with the mobile phone of the user B in advance in the mobile communication system. The mobile communication system calls the fixed-line phone according to the information of the fixed-line phone registered by the user.

Step 24: The mobile communication system delivers CONNECT by using the subscription information of the called user B acquired from the GMSC to connect the mobile phone of the called user B and the mobile phone of the called user B rings.

In the specific implementation, the location information of the mobile terminal sent by the AP may also include call state information of one or more mobile terminals in an office. When the mobile communication system determines that a mobile terminal of a user locates in the office according to the location information of the mobile terminal and the call state of the mobile terminal of the user is busy, the mobile communication system may acquire the information of the fixed-line phone in the office associated with the mobile phone of the user B and call the fixed-line phone, instead of performing step 24.

It is implemented in the embodiment that the mobile communication system enables the fixed-line phone and the mobile phone of the user B to ring at the same time by using the location information corresponding to the mobile phone of the user B that enters the office sent by the AG and the information of the fixed-line phone associated with the mobile phone of the user B. When the call state of the mobile phone of the user B is busy, only the fixed-line phone is called.

If the mobile terminal (mobile phone) of the user leaves from an office of an enterprise, the processing process of the method for calling only a mobile phone of a user when the user leaves the office further provided in the embodiment of the present invention is shown in FIG. 3, which include the following processing steps:

Step 31: A mobile communication system updates location information corresponding to a mobile phone of a user that leaves an office in an internal database of the mobile communication system.

An AP checks whether a user that enters the office of the enterprise is still in the office at every predetermined interval (for example, 5 minutes). If the AP detects that a user (for example, a user B) already leaves the area controlled by the AP, it indicates that the user B already leaves the office. Therefore, the AP transmits, through an IP network, the location information corresponding to the mobile phone of the user B that leaves the office to an AG deployed on a network side. The AG transmits, through a SOAP interface, the location information corresponding to the mobile phone of the user B that leaves the office to a mobile communication system deployed on a network side. The AP may notify that the user B already leaves the office by carrying a leave identity in the location information corresponding to the mobile phone of the user B or by making a location information field corresponding to the number of the mobile phone B in the location information be blank.

The mobile communication system updates, in the internal database, the location information corresponding to the mobile phone of the user B that leaves the office, that is, updates the location information corresponding to the number of the mobile phone B in the location information from being in the office to being out of the office.

Step 32: The mobile communication system receives a call for the mobile phone of the user B from another user.

The mobile communication system further needs to receive call information of the users stored in the internal database. For example, when a user A calls the mobile phone of the user B, the mobile communication system receives the call.

The mobile communication system queries the internal database, learns that the called user B already leaves the office, and needs to only implement the function that the mobile phone of the called user rings.

Step 33: The mobile communication system enables the mobile phone of the called user B to ring by using the subscription information of the called user B acquired from a GMSC.

The mobile communication system delivers "Invite" to request to an MGCF to connect to the mobile phone of the called user B and the MGCF routes the "Invite" to the GMSC.

The GMSC sends an SRI to an HLR to query the subscription information of the called user B according to the number of the mobile phone of the called user B. The HLR returns the subscription information of the called user B to the GMSC. The GMSC then sends the subscription information to the mobile communication system.

The mobile communication system delivers CONNECT by using the subscription information of the called user B to connect to the mobile phone of the called user B and the mobile phone of the called user B rings.

In practical applications, the mobile communication system further acquires information of anther terminal associated with the mobile phone of the user B outside the office of the enterprise and calls the mobile phone and anther terminal of the user B.

In the embodiment, the following is implemented: the mobile communication system enables only the mobile phone of the user B to ring by using the location information corresponding to the mobile phone of the user B that leaves the office sent by the AG, and does not allow the fixed-line phone associated with the mobile phone of the user B in the office to ring.

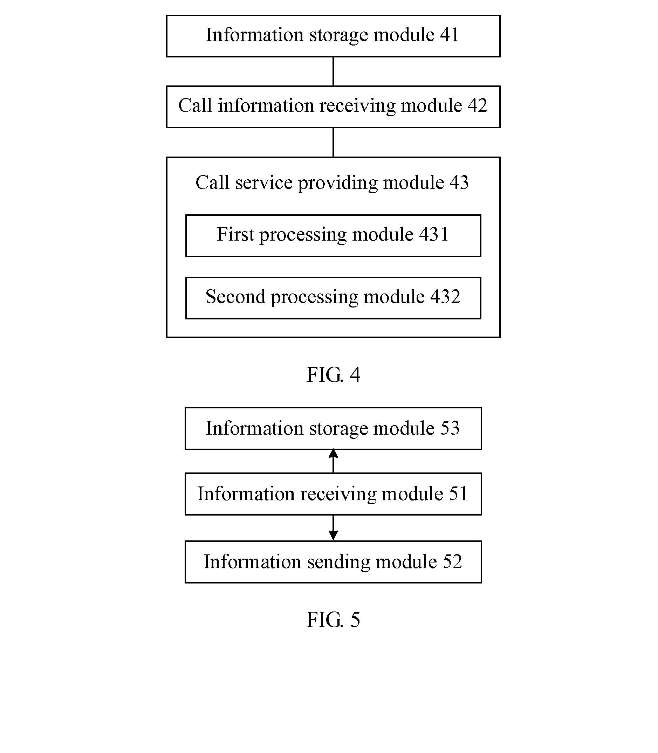

The embodiment of the present invention further provides an apparatus of providing a service to a user. The apparatus is disposed on a network side and the structure in the specific implementation is shown in FIG. 4, which may specifically include:
a call information receiving module 42, configured to receive call information of calling a mobile terminal of a user; and
a call service providing module 43, configured to, after the call information receiving module receives the call information, call the user according to stored location information corresponding to the mobile terminal of the user sent by an access point AP.

The apparatus further includes:
an information storage module 41, configured to receive the location information corresponding to the mobile terminal of the user, wherein the location information is sent by an AG through a SOAP interface after receiving the location information corresponding to the mobile terminal of the user sent by the AP, and store or update the location information corresponding to the mobile terminal of the user.

The call service providing module 43 specifically includes: at least one of a first processing module 431 and a second processing module 432.

The first processing module 431 is configured to, when it is determined that the mobile terminal of the user locates in an office on a client side according to the location information corresponding to the mobile terminal of the user, acquire information of a fixed-line phone associated with the mobile terminal, and call the mobile terminal and the fixed-line phone and;
when it is determined that mobile terminal of the user leaves the office on the client side according to the location information corresponding to the mobile terminal of the user, call the mobile terminal of the user or acquire information of anther terminal associated with the mobile terminal and outside the office on the client side, and call anther terminal of the mobile terminal.

The second processing module 432 is configured to, when the location information of the mobile terminal sent by the AG further includes call state information of the mobile terminal in the office on the client side and the call state information of the mobile terminal of the user is busy, acquire information of a fixed-line phone associated with the mobile terminal in the office on the client side and call the fixed-line phone.

An embodiment of the present invention further provides an access gateway AG, the structure of which in the specific implementation is shown in FIG. 5 and may specifically include:
an information receiving module 51, configured to receive location information corresponding to a mobile terminal of a user sent by an access point AP; and
an information sending module 52, configured to send the location information corresponding to the mobile terminal of the user received by the information receiving module to a mobile communication system on a network side for storage, so that the mobile communication system receives call information of calling the mobile terminal of the user and then calls the user according to the stored location information corresponding to the mobile terminal of the user sent by the AG.

The AG may also include: an information storage module 53, configured to store location information corresponding to the mobile terminal of the user sent by an AP or update the stored location information corresponding to the mobile terminal of the user.

The information sending module 51 is further configured to, when the stored location information corresponding to the mobile terminal of the user is updated, send the updated location information corresponding to the mobile terminal of the user to the mobile communication system on the network side.

In practical applications, the information sending module 51 may send the location information corresponding to the mobile terminal of the user through a SOAP interface.

Persons skilled in the art should understand that all or a part of the steps of the method according to the embodiments of the present invention may be implemented by a computer program instructing relevant hardware. The program may be stored in a computer readable storage medium. When the program is run, the steps of the method according to the embodiments of the present invention are performed. The storage medium may be a magnetic disk, an optical disk, a Read-Only Memory (Read-Only Memory, ROM) or a Random Access Memory (Random Access Memory, RAM).

In conclusion, in the embodiments of the present invention, the AP is deployed to an enterprise to implement accurate positioning of a user that enters or leaves an office of the enterprise and update the location information of the user to a mobile communication system on a network side through the AG in real time. Therefore, the accurate positioning of the mobile terminal of the user no longer has to rely on the network coverage of the PLMN.

In the embodiments of the present invention, the AP may also acquire information a call state of a user and update the information to a mobile communication system on a network side through the AG in real time.

The mobile communication system on the network side can implement different service experiences for a user according to the acquired information such as the location information and call state of the user.

The above descriptions are merely exemplary specific embodiments of the present invention, but not intended to limit the present invention. Any changes or replacements made by persons skilled in the art easily without departing from the technical coverage of the present invention should fall within the protection scope of the present invention as defined in the claims.

## Claims

1. A method for providing a call service to a user, comprising:
receiving call information of calling a mobile terminal of a user; and
calling the user according to stored location information corresponding to the mobile terminal of the user sent by an access gateway AG.

2. The method for providing a call service to a user according to claim 1, wherein before the receiving the call information of calling the mobile terminal of the user, the method further comprises:
receiving the location information corresponding to the mobile terminal of the user, wherein the location information is sent by the AG through a Simple Object Access Protocol SOAP interface after the AG receives the location information corresponding to the mobile terminal of the user sent by an access point AP, and storing or updating the location information corresponding to the mobile terminal of the user.

3. The method for providing a call service to a user according to claim 1 or 2, wherein the calling the user according to the stored location information corresponding to the mobile terminal of the user sent by the AG specifically comprises:
when it is determined that the mobile terminal of the user locates in an office on a client side according to the location information corresponding to the mobile terminal of the user, acquiring information of a fixed-line phone associated with the mobile terminal in the office on the client side, and calling the mobile terminal and the fixed-line phone; and
when it is determined that the mobile terminal of the user leaves the office on the client side according to the location information corresponding to the mobile terminal of the user, calling the mobile terminal of the user or acquiring information of another terminal associated with the mobile terminal and outside the office on the client side, and calling the mobile terminal and anther terminal.

4. The method for providing a call service to a user according to claim 1 or 2, wherein the calling the user according to the stored location information corresponding to the mobile terminal of the user sent by the AG specifically comprises:
when the location information of the mobile terminal sent by the AG further comprises call state information of the mobile terminal in the office on the client side and the call state information of the mobile terminal of the user is busy, acquiring information of a fixed-line phone associated with the mobile terminal in the office on the client side, and calling the fixed-line phone.

5. An apparatus for providing a call service to a user, disposed on a network side, and specifically comprising:
a call information receiving module, configured to receive call information of calling a mobile terminal of a user; and
a call service providing module, configured to, after the call information receiving module receives the call information, call the user according to stored location information corresponding to the mobile terminal of the user sent by an access gateway AG.

6. The apparatus for providing a call service to a user according to claim 5, further comprising:
an information storage module, configured to receive the location information corresponding to the mobile terminal of the user, wherein the location information is sent by the AG through a Simple Object Access Protocol SOAP interface after the AG receives the location information corresponding to the mobile terminal of the user sent by an AP, and store or update the location information corresponding to the mobile terminal of the user.

7. The apparatus for providing a call service to a user according to claim 5 or 6, wherein the call service providing module comprises:
a first processing module, configured to, when it is determined that the mobile terminal of the user locates in an office on a client side according to the location information corresponding to the mobile terminal of the user, acquire information of a fixed-line phone associated with the mobile terminal in the office on the client side, and call the mobile terminal and the fixed-line phone; and
when it is determined that the mobile terminal of the user leaves the office on the client side according to the location information corresponding to the mobile terminal of the user, call the mobile terminal of the user or acquire information of anther terminal associated with the mobile terminal and outside the office on the client side, and call the mobile terminal and anther terminal.

8. The apparatus for providing a call service to a user according to claim 5 or 6, wherein the call service providing module comprises:
a second processing module, configured to, when the location information of the mobile terminal sent by the AG further comprises call state information of a mobile terminal within an office on a client side and the call state information of the mobile terminal of the user is busy, acquire information of a fixed-line phone associated with the mobile terminal in the office on the client side, and call the fixed-line phone.

9. A method for transmitting location information corresponding to a mobile terminal of a user, comprising:
receiving location information corresponding to the mobile terminal of the user sent by an access point AP; and
sending the location information corresponding to the mobile terminal of the user to a mobile communication system on a network side for storage, so that the mobile communication system receives the call information of calling the mobile terminal of the user and then calls the user according to stored location information corresponding to the mobile terminal of the user.

10. The method for transmitting location information corresponding to a mobile terminal of a user according to claim 9, further comprising:
storing the location information corresponding to the mobile terminal of the user sent by the AP, or updating the stored location information corresponding to the mobile terminal of the user; and
when the stored location information corresponding to the mobile terminal of the user is updated, send the updated location information corresponding to the mobile terminal of the user to the mobile communication system on the network side.

11. An access gateway AG, comprising:
an information receiving module, configured to receive location information corresponding to a mobile terminal of a user sent by an access point AP; and
an information sending module, configured to send the location information corresponding to the mobile terminal of the user received by the information receiving module to a mobile communication system on a network side for storage, so that the mobile communication system receives call information of calling a mobile terminal of a user and then calls the user according to the stored location information corresponding to the mobile terminal of the user sent by the AG.

12. The access gateway AG according to claim 11, wherein the AG further comprises:
an information storage module, configured to store the location information corresponding to the mobile terminal of the user sent by the AP, or update the stored location information corresponding to the mobile terminal of the user; wherein
the information sending module is further configured to, when the stored location information corresponding to the mobile terminal of the user is updated, send the updated location information corresponding to the mobile terminal of the user to the mobile communication system on the network side.
